# NEUE EUROPÄISCHE PATENTSCHRIFT

(11) **EP 1 406 077 B2**
(45) Veröffentlichungstag und Bekanntmachung des Hinweises auf die Entscheidung über den Einspruch: **23.08.2017**
(45) Hinweis auf die Patenterteilung: 03.12.2008
(21) Anmeldenummer: 04000425.1
(22) Anmeldetag: 22.03.2000
(51) Int. Cl.: G01N 1/34, B01D 15/02

(54) **Sammler für die Festphasenmikroextraktion und Analyse zu untersuchender Substanzen**
Collector for the solid phase microextraction and the analysis of substances
Collecteur pour la micro-extraction en phase solide et l'analyse de substances

(30) Priorität: 26.03.1999 DE 19913809; 14.07.1999 DE 19933017
(43) Veröffentlichungstag der Anmeldung: 07.04.2004
(62) Teilanmeldung aus: 00106217.3
(73) Patentinhaber: Gerstel Systemtechnik GmbH & Co. KG, 45473 Mülheim (DE)
(72) Erfinder: Sandra, Patrik, Prof. Dr., 8510 Kortrijk-Marke (BE); Baltussen, Erik, 5232 JG's- Hertogenbosch (NL); David, Frank, Dr., 8310 Brügge (BE)
(74) Vertreter: Sparing Röhl Henseler

(56) Entgegenhaltungen:
- EP-B- 0 523 092
- WO-A-98/41855
- WO-A-98//41855
- DE-A- 19 753 701
- US-A- 4 236 404
- US-A- 5 664 938
- US-A- 5 693 228
- EISERT R ET AL: "Design of automated solid-phase microextraction for trace analysis of organic compounds in aqueous samples" JOURNAL OF CHROMATOGRAPHY A, ELSEVIER SCIENCE, NL, Bd. 776, Nr. 2, 1. August 1997 (1997-08-01), Seiten 293-303, XP004125604 ISSN: 0021-9673

## Beschreibung

Die Erfindung betrifft einen Sammler für die Festphasenmikroextraktion und Analyse zu untersuchender Substanzen.

Die US 5,639,228 beschreibt eine Vorrichtung und ein Verfahren zum Durchführen einer Festphasenmikroextraktion (SPME). An der Spritze einer herkömmlichen SPME-Einheit ist eine ausschiebbare Faser befestigt. Die Faser dient als Extraktionsmittel und kann zu untersuchende Substanzen aus einem Fluid extrahieren. Um die Extraktion zu verbessern ist ein Vibrator vorgesehen, der die Spritze mit der Faser vibriert. Zur Extraktion zu untersuchender Substanzen wird die Spritze mit der Faser in einen Probenbehälter eingeführt, wobei die Spritze ein Septum durchstößt. Anschließend beginnt der Vibrator die Spritze mit der Faser zu vibrieren. Durch die Vibration der Faser wird die Extraktion von zu untersuchenden Substanzen in die Faser verbessert. Im Anschluss an die Extraktion wird die Spritze mit einem Autosampler in ein Analysegerät, beispielsweise in den Injektor eines Gaschromatographen überführt. Die zu untersuchenden Substanzen werden von der Faser desorbiert und anschließend in dem Analysegerät analysiert.

Aus WO 98/41855 A1 ist ein Verfahren zur Festphasenmikroextraktion bekannt, in der eine extrahierende Oberfläche in einem rohrartigen Gehäuse befestigt ist. An dem Gehäuse sind eine Heizung und eine Kühlung vorgesehen. Bei Verwendung der Heizung entweicht zunächst aufgrund der Wärmeausdehnung Luft aus dem Gehäuse. Anschließend wird das Gehäuse in Kontakt mit einem Trägerfluid, insbesondere Luft, mit zu untersuchenden Substanzen gebracht, und die Kühlung eingeschaltet. Dadurch wird die Luft komprimiert und weiteres Trägerfluid wird in das Gehäuse gesaugt. Auf diese Weise nimmt die extrahierende Oberfläche die Substanzen auf. Anschließend ist eine Desorption der zu untersuchenden Substanzen vorgesehen, wozu das offene Gehäuse in einen Injektor eingeführt wird.

Aus EP 0 523 092 B1 ist ein Verfahren zur Festphasenmikroextraktion und Analyse zu untersuchender Substanzen bekannt, bei dem eine Spritze verwendet wird, die eine durch die Spritzennadel ausschiebbare Faser aufweist. Die zweckmäßigerweise beschichtete Faser wird mit der die zu untersuchenden Substanzen enthaltenden Trägerflüssigkeit, die gleichzeitig gerührt wird, in Kontakt gebracht, wonach die Faser eingezogen und die Spritzennadel in eine Aufgabeeinrichtung eines Analysegeräts eingebracht wird, woran sich eine Desorption von anhaftenden Substanzen unter Verwendung eines Trägergases anschließt. Die als Sammler dienende Faser ist nur sehr beschränkt für zu untersuchende Substanzen aufnahmefähig und wird zudem nur in die gerührte Trägerflüssigkeit gehalten, so daß die Empfindlichkeit der Analyse selbst dann zu wünschen übrig läßt, wenn man die beschichtete Faser vibriert.

Aufgabe der Erfindung ist es, einen Sammler für die Festphasenmikroextraktion und Analyse zu untersuchender Substanzen zu schaffen, der vielseitig verwendbar ist und zu einer wesentlich verbesserten Empfindlichkeit führt.

Diese Aufgabe wird mit den Merkmalen des Anspruchs 1 gelöst.

Ein derartiger Sammler läßt sich sowohl als Passivsammler als auch als Rührelement eines Magnetrührers bzw. in einer relativ zum Sammler durch Ultraschall bewegten Trägerflüssigkeit einsetzen, so daß er vielseitig verwendbar ist. Zudem kann die Analysegenauigkeit dementsprechend ganz erheblich gesteigert werden, wobei es zudem möglich ist, großvolumige Gefäße, etwa Litergefäße, für die die zu untersuchenden Substanzen enthaltene Flüssigkeit zu verwenden.

Weitere Ausgestaltungen der Erfindung sind der nachfolgenden Beschreibung und den Unteransprüchen zu entnehmen.

Die Erfindung wird nachstehend anhand von in den beigefügten Abbildungen schematisch dargestellten Ausführungsbeispielen einer Einrichtung zum Durchführen des Verfahrens und von Passivsammlern näher erläutert.
Fig. 1 zeigt schematisch eine Einrichtung zur Durchführung des Verfahrens zur Festphasenmikroextraktion und Analyse von in einer Trägerflüssigkeit befindlichen Substanzen.
Fig. 2 bis 4 zeigen verschiedene Ausführungsformen von Passivsammlern im Schnitt.
Fig. 5 zeigt einen Vergleich von zwei Gleichgewichtskurven bezüglich des Standes der Technik und der Erfindung.
Fig.6 zeigt schematisch eine weitere Einrichtung zur Durchführung des Verfahrens zur Festphasenmikroextraktion und Analyse von in einer Trägerflüssigkeit befindlichen Substanzen.
Fig. 7 zeigt schematisch ein Head-Space-Gefäß.

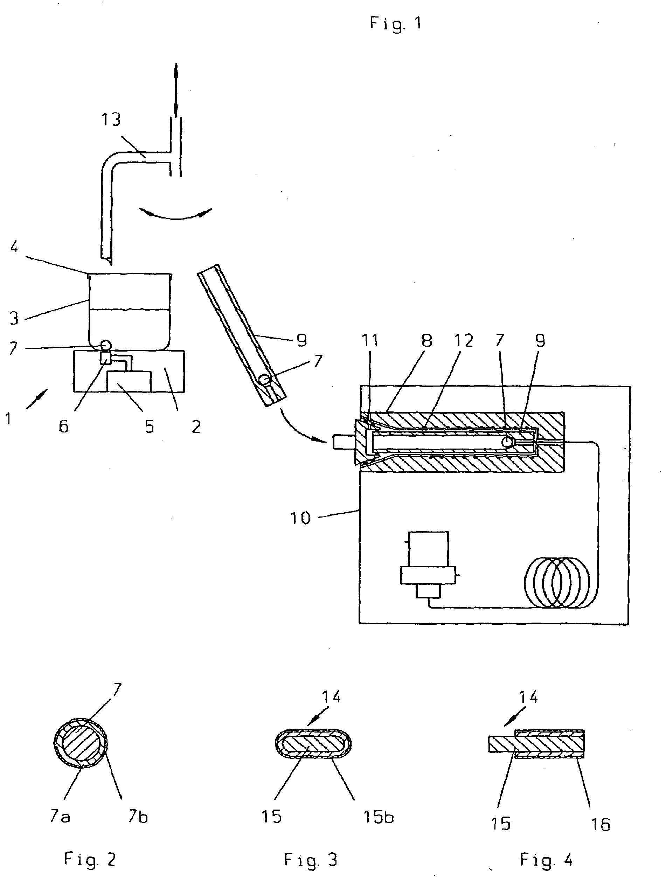

Gemäß Fig. 1 ist ein Magnetrührer 1 vorgesehen, der ein auf einem Untersatz 2 befindliches, becherglasartiges Gefäß 3 umfaßt, das zweckmäßigerweise oberseitig durch ein Septum 4 verschlossen sein kann. Das Gefäß 3 nimmt vor dem Verschließen mit dem Septum 4 eine Trägerflüssigkeit mit zu analysierenden Substanzen auf. Das Befüllen und Verschließen des Gefäßes 3 kann vorab an einem Probenahmeort vorgenommen werden. Bei der Trägerflüssigkeit kann es sich um Wasser und/oder ein organisches Lösungsmittel oder -gemisch oder um verflüssigtes Gas handeln.

Der Untersatz 2 beinhaltet einen Elektromotor 5, dessen Welle einen Magneten 6 exzentrisch trägt. Im Gefäß 3 befindet sich eine Rührkugel 7 aus ferromagnetischem Material wie Eisen oder Stahl, die zweckmäßigerweise glas- bzw. kunststoffummantelt ist und einen Durchmesser im Bereich von wenigen Millimetern haben kann. Für die Kunststoffummantelung 7a kann z.B. Polytetrafluorethylen oder ein anderes fluoriertes Kohlenwasserstoffpolymer verwendet werden. Die Rührkugel 7 ist vorzugsweise mit einer aktiven Phase 7b zur Sorption/ Adsorption von in der Trägerflüssigkeit enthaltenen Substanzen belegt. Hierbei kann es sich um eine Beschichtung aus der Gruppe umfassend Polyethylenglykol, Silikon, Polyimid, Octadecyltrichlorsilan, Polymethylvinylchlorsilan, flüssigkristalline Polyacrylate, gepfropften selbstorganisierten monomolekularen Schichten und anorganischen Beschichtungsmaterialien handeln.

Die Rührkugel 7 läßt man während einer ausreichenden Zeit rühren, während der sie intensiv mit der Trägerflüssigkeit und damit mit den darin enthaltenen Substanzen in Kontakt gelangt und letztere sorbiert und/oder adsorbiert, so daß sie als Sammler dient. Nach Beendigung des Rührens wird die Rührkugel 7 ergriffen und in einer Festphasenextraktionseinrichtung, vorzugsweise einer Desorptionseinrichtung 8 angeordnet. Letztere umfaßt zweckmäßigerweise ein Desorptionsröhrchen 9 mit einem Durchmesserabschnitt, dessen Durchmesser etwas größer als derjenige der Rührkugel 7 ist, an den sich über einen kegelstumpfförmigen Abschnitt ein Durchmesserabschnitt anschließt, dessen Durchmesser kleiner als derjenige der Rührkugel 7 ist. Die Desorptionseinrichtung 8 ist Teil eines Analysegeräts 10, etwa eines Gaschromatographen, an einen Trägergasanschluß 11 angeschlossen, so daß Trägergas durch das Desorptionsröhrchen 9 an der Rührkugel 7 unter Desorption von daran haftenden Substanzen vorbeiströmen und letztere einer Analyse zuführen kann. Die Desorptionseinrichtung 8 umfaßt vorzugsweise eine Heizeinrichtung 12, um eine Thermodesorption durchführen zu können.

Die Rührkugel 7 kann automatisch mittels eines das Septum 4 durchstoßenden Entnahmeorgans 13, das in Form eines Greifers, Saugers oder auch als Magnet ausgebildet sein kann, aus dem Gefäß 3 entnommen und in dem Desorptionsröhrchen 9 angeordnet werden, das dann automatisch in der Desorptionseinrichtung 8 plaziert werden kann, so daß die gesamte Festphasenmikroextraktion und Analyse automatisch vornehmbar ist. Hierzu können für mehrere Proben entsprechende Gefäße 3 auf einem schrittweise drehbaren Drehteller angeordnet werden, unter dem in einer Position der Untersatz 2 des Magnetrührers 1 angeordnet ist.

Um reproduzierbar messen zu können, sind im allgemeinen Rührzeiten von ca. 45 bis 60 min erforderlich.

Anstelle eines Rührelements in Form einer Rührkugel 7 läßt sich auch ein solcher in Form eines Rührstabs 14 verwenden. Dieser kann einen beschichteten stabförmigen Träger 15 aus ferro- oder paramagnetischem Material aufweisen, wobei er im letzteren Falle eine Mindestlänge von etwa 2 cm haben sollte, während bei Einsatz von ferromagnetischem Material auch kleinere Längen möglich sind. So kann es sich um einen an den Enden abgerundeten und insgesamt mit der aktiven Phase 15b beschichteten, stabförmigen Träger 15 (Fig. 3) oder auch um einen solchen aus einem Metalldrahtabschnitt handeln, der von einem zylindrischen Mantel 16 aus schlauchartigem Material der aktiven Phase umgeben ist (Fig. 4). Der stabförmige Träger 15 besitzt einen Durchmesser von ca. 3 bis 6 mm.

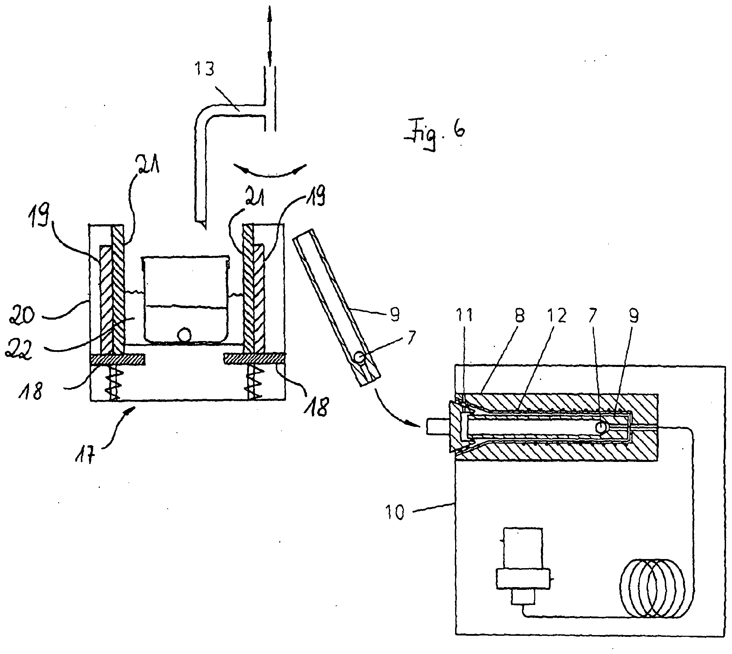

Es kann gegebenenfalls ebenfalls eine verbesserte Analyse erzielt werden, wenn die die Substanzen enthaltende und in einem einen Sammler, vorzugsweise eine Rührkugel 7, enthaltenen Gefäß befindliche Trägerflüssigkeit alternativ oder zusätzlich mittels Ultraschall in Bewegung versetzt wird. Fig. 6 zeigt eine Ausführungsform einer solchen Ultraschallrührvorrichtung als Schwingtopf 17, bei der ein oder mehrere mittels Isolierplatte 18 abgeschirmte Ultraschallgeber (Schwinger) 19 in ein Gehäuse 20 unterhalb und/oder seitlich eingebaut sind. Eine dem Ultraschallgeber 19 vorgelagerte Metallwand 21 mit einer Wandstärke von d = n * λ/2 (λ: Schallwellenlänge) überträgt die Schwingungen auf eine Koppelflüssigkeit 22 des Schwingtopfes 17, vorzugsweise Wasser, die in Bewegung versetzt wird. In dem Schwingtopf 17 wird das Gefäß mit den zu untersuchenden Substanzen eingebracht.

Hierbei kann als Gefäß 3 auch vorteilhaft ein solches eines Magnetrührers verwendet werden, wobei mittels der beschichteten magnetischen Rührkugel 7 als Sammler gerührt wird, so daß die Ultraschallbeaufschlagung zusätzlich zum Magnetrühren erfolgt.

Generell ist eine thermische, flüssige oder eine Desorption mittels überkritischer Gase möglich.

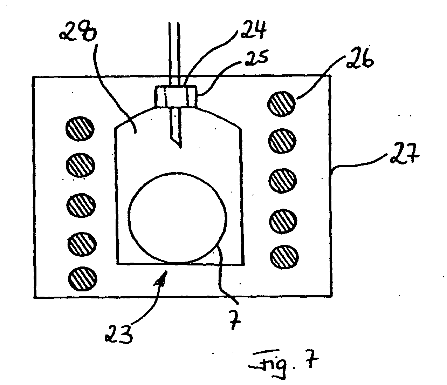

Anstatt in eine Thermodesorptionseinrichtung 8 eingebracht zu werden, kann das Rührelement mittels des Entnahmeorgans 13 in einem Head-Space-Gefäß 23 (Fig. 7) angeordnet werden, dessen Durchmesser nur wenig größer ist als der Durchmesser der Rührkugel 7. Das Head-Space-Gefäß 23 wird anschließend durch ein Septum 24 und einen Dichtring 25 mittels eines Verschlußinstrumentes verschlossen und in einen Head-Space-Kopf 26 eingebracht. In diesem wird das Head-Space-Gefäß 23 mittels einer Heizvorrichtung 27 vorgeheizt und es kommt zum Druckaufbau, bei dem sich ein Gleichgewicht für die flüchtigen zu untersuchenden Substanzen mit der Gasphase 28 oberhalb der Rührkugel 7 einstellt. Diese können durch eine das Septum 24 durchstoßende Spritze entnommen werden und der Trennsäule etwa eines Gaschromatographen zugeführt werden.

Anstatt in einer Thermodesorptionseinrichtung 8 desorbiert zu werden, kann das Rührelement auch in eine eine organische Flüssigkeit enthaltende Extraktionseinrichtung eingebracht werden, wobei als organische Flüssigkeit eine solche verwendet wird, die eine hohe Wechselwirkung mit den zu untersuchenden Substanzen aufweist und letztere - gegebenenfalls unter einer Rührbewegung des Rührelements gegenüber dieser Flüssigkeit - aufnimmt, wonach die mit den zu untersuchenden Substanzen angereicherte Flüssigkeit mittels einer Spritze aufgenommen und einer Aufgabeeinrichtung etwa eines Gaschromatographen zugeführt wird, um mittels eines Trägergases etwa über eine gaschromatographische Trennsäule einer Analyse zugeführt zu werden.

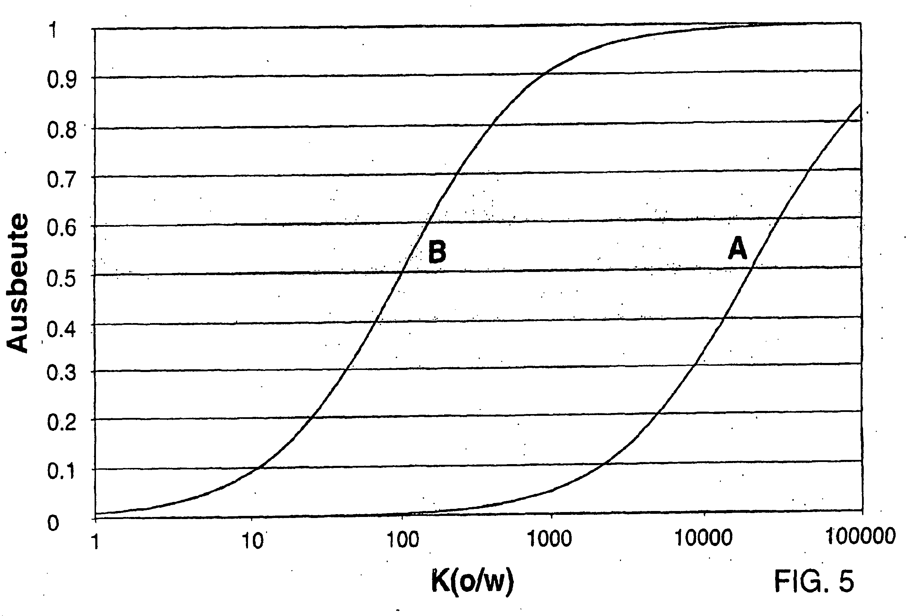

Aufgrund der Verwendung eines Rührelements in einem Magnetrührer bzw. alternativ oder zusätzlich in einer Ultraschallrührvorrichtung und dessen intensiven Kontakt mit der die zu untersuchenden Substanzen enthaltenden Trägerflüssigkeit läßt sich eine Analysenempfindlichkeit erzielen, die gegenüber der Verwendung der bekannten Faser um Größenordnungen, beispielsweise etwa 1000-fach besser ist. Fig. 5 zeigt ein Vergleichsdiagramm bezüglich der Ausbeute (auf der Ordinate aufgetragen) von aufgenommenen Substanzen für eine bekannte, mit aktiver Phase beschichtete Faser (Kurve A) und einen mit aktiver Phase ummantelten Rührstab, der mittels Magnetrührers gemäß der Erfindung (Kurve B) bei Stoffgleichgewicht gerührt wurde, wobei auf der Abzisse der Konzentrationsquotient (K(o/w)) einer Substanz in Oktanol und Wasser aufgetragen ist. Dieser Koeffizient ist (für Normaltemperatur) für eine große Vielzahl von Substanzen der Literatur entnehmbar. Beträgt dieser Konzentrationsquotient beispielsweise 100, so erkennt man aus dem Diagramm von Fig. 5, daß sich hierbei bezüglich der beschichteten Faser eine Ausbeute von etwa 1 % und erfindungsgemäß eine solche von etwa 50% ergibt. Bei einem Konzentrationskoeffizienten unter 100 läßt sich im allgemeinen über die beschichtete Faser keine zuverlässige Messung vornehmen, während das ummantelte Rührelement durchaus noch verläßliche Messungen ermöglicht. Insgesamt wird mit dem ummantelten Rührelement die Meßgenauigkeit erheblich, d.h. um Zehnerpotenzen verbessert und der Meßbereich erheblich erweitert, indem die Analyseempfindlichkeit etwa um einen Faktor 1000 verbessert wird. Eine Verbesserung der Analyseempfindlichkeit durch Erwärmen der die zu untersuchenden Substanzen enthaltenden Flüssigkeit, wie sie für eine beschichtete Faser in vielen Fällen notwendig ist und zudem Meßfehler verursachen kann, ist bei dem ummantelten Rührelement im allgemeinen nicht notwendig.

Außerdem kann ein derartiges Rührelement als Passivsammler in einer zu untersuchende Substanzen enthaltenden gasförmigen, beispielsweise belasteten Umgebung angeordnet oder von einer in der Umgebung arbeitenden Person getragen werden, wobei der Passivsammler der Umgebung eine ausreichende Zeit ausgesetzt und anschließend die davon sorbierten und/oder adsorbierten Substanzen einer Extraktion unterworfen wird, wonach desorbierte Substanzen über eine Aufgabeeinrichtung mittels eines Trägergases zur Analyse transportiert werden, etwa um persönliche Belastungen mit Schadstoffen zu kontrollieren.

## Patentansprüche

1. Sammler bestehend aus einem stabförmigen Träger, der mit einer Beschichtung aus schlauchartigem, bezüglich der zu untersuchenden Substanzen sorbierenden und/oder adsorbierenden Material versehen ist, **dadurch gekennzeichnet, dass** für eine Festphasenmikroextraktion und Analyse zu untersuchender Substanzen, insbesondere zum Einsetzen in eine Thermodesorptionsvorrichtung eines Gaschromatographen, der Sammler selbstständig ausgebildet ist und der stabförmige Träger (15) einen Durchmesser von 3 bis 6 mm besitzt.

2. Sammler nach Anspruch 1, **dadurch gekennzeichnet, daß** der Träger aus magnetischem Material besteht.

3. Sammler nach Anspruch 1 oder 2, **dadurch gekennzeichnet, daß** der Träger ein Metalldrahtabschnitt ist.

4. Sammler nach einem der Ansprüche 1 bis 3, **dadurch gekennzeichnet, daß** die Beschichtung aus einem Material aus der Gruppe umfassend Polyethylenglykol, Silikon, Polyimind, Octadecyltrichlorsilan, Polymethylvinylchlorsilan, flüssigkristalline Polyacrylate, gepfropften selbstorganisierten monomolekularen Schichten und anorganischen Beschichtungsmaterialien besteht.

5. Sammler nach einem der Ansprüche 1 bis 4, **dadurch gekennzeichnet, daß** er ein Rührelement bildet.

## Claims

1. Collector comprising a rod-like support, which is provided with a coating of tube-like material that is absorbent and/or adsorbent with respect to the substances to be investigated, **characterized in that** the collector is designed independently for solid-phase microextraction and analysis of substances to be investigated, in particular for use in a thermal desorption apparatus of a gas chromatograph and the rod-like support (15) has a diameter of 3 to 6 mm.

2. Collector according to Claim 1, **characterized in that** the support consists of magnetic material.

3. Collector according to Claim 1 or 2, **characterized in that** the support is a portion of metal wire.

4. Collector according to one of Claims 1 to 3, **characterized in that** the coating consists of a material from the group comprising polyethylene glycol, silicone, polyimide, octadecyltrichloro-silane, polymethylvinylchlorosilane, liquid-crystalline polyacrylates, grafted, self-organized monomolecular layers and inorganic coating materials.

5. Collector according to one of Claims 1 to 4, **characterized in that** it forms a stirring element.

## Revendications

1. Collecteur, constitué par un support en forme de barreau, qui est pourvu d'un revêtement en matériau semblable à un tuyau souple, qui absorbe et/ou adsorbe les substances à analyser, **caractérisé en ce que** le collecteur est réalisé de façon autonome pour une microextraction en phase solide et pour l'analyse des substances à analyser, en particulier pour l'utilisation dans un dispositif de thermodésorption d'un chromatographe en phase gazeuse et le support en forme de barreau (15) a un diamètre de 3 à 6 mm.

2. Collecteur selon la revendication 1, **caractérisé en ce que** le support est en matériau magnétique.

3. Collecteur selon la revendication 1 ou 2, **caractérisé en ce que** le support est un tronçon de fil métallique.

4. Collecteur selon l'une des revendications 1 à 3, **caractérisé en ce que** le revêtement est en un matériau du groupe qui comprend polyéthylène glycol, silicone, polyimide, octadécyl-trichlorosilane, polyméthylvinyl-chlorosilane, polyacrylate cristallin liquide, couche monomoléculaire greffée à autoorganisation, et matériaux de revêtement inorganiques.

5. Collecteur selon l'une des revendications 1 à 4, **caractérisé en ce qu'**il forme un élément agitateur.
